# FASCICULE DE BREVET EUROPEEN

(11) **EP 0 721 271 B1**
(45) Date de publication et mention de la délivrance du brevet: **12.05.2004**
(21) Numéro de dépôt: 95402584.7
(22) Date de dépôt: 17.11.1995
(51) Int. Cl.: H04L 29/06

(54) **Système de contrôle d'accès à des machines informatiques connectées en réseau privé**
Zugriffskontrollsystem für an einem Privatnetz angeschlossene Computer
Access control system for computers connected in a private network

(30) Priorité: 21.11.1994 FR 9413899
(43) Date de publication de la demande: 10.07.1996
(73) Titulaire: FRANCE TELECOM, 75015 Paris (FR)
(72) Inventeur: Allegre, Francois, F-94270 Le Kremlin-Bicetre (FR); Campana, Mireille, F-92140 Clamart (FR); Roy, Jean-Michel, F-92360 Meudon-La-Forêt (FR)
(74) Mandataire: Fréchède, Michel

(56) Documents cités:
- EP-A- 0 431 751
- EP-A- 0 554 182
- WO-A-92/04790

## Description

L'invention concerne un système de contrôle d'accès à des machines informatiques, connectées en réseau privé.

A l'heure actuelle, sur de nombreux réseaux de télécommunication, tel que le réseau INTERNET par exemple, la sécurité, c'est-à-dire essentiellement le contrôle d'accès à un service, est assurée soit au niveau de l'infrastructure du réseau, par exemple au moyen de listes d'accès garanties par l'opérateur du service, soit au niveau des machines terminales connectées au réseau. La fonction de contrôle d'accès permet généralement de limiter l'accès à des machines autorisées par le responsable et d'enregistrer les paramètres de connexion, adresses, heure ou autres, afin de détecter des anomalies telles que les tentatives d'intrusion.

La demande de brevet EP 0554 182 A1 décrit un dispositif de communication entre équipements appartenant à plusieurs réseaux. A un réseau sûr est connecté un unique appareil interface, agencé pour donner à des postes de travail, via un réseau non sûr, l'accès à des serveurs protégés sur le réseau sûr.

La demande de brevet EP 0431 751 A1 décrit des répéteurs multiports raccordés chacun à un groupe d'équipements terminaux de données.
Pour autoriser ou non un accès à un groupe d'équipements terminaux de données, l'unique répéteur auquel ce groupe est raccordé, dispose de règles dans sa mémoire.

D'une manière générale, la fonction de sécurité est donc, soit reportée et distribuée au niveau de chaque machine, soit assurée par une entité dédiée, placée à l'entrée du réseau privé, dans ou en aval du routeur, cette entité gérant la sécurité et ses répercussions sur le transfert des données.
Dans les réseaux téléphoniques toutefois, une séparation de la fonction de transport des communications de celle de la gestion de ce transfert et du réseau est toutefois réalisée. Mais les fonctionnalités de gestion ne concernent pas les fonctions de sécurité.

Dans les réseaux privés de télécommunication actuels, la fonction de sécurité est réalisée à partir d'éléments de ces réseaux permettant essentiellement d'établir des tables d'accès en fonction du couple d'adresses appelant et appelé. Cette fonction sécurité est un minimum mais elle est tout-à-fait insuffisante afin de faire face aux risques de falsification d'adresses. En effet, sur beaucoup de réseaux, l'adresse de la machine appelante est une valeur déclarative donnée par l'appelant et il est ainsi facile, pour un propriétaire indélicat d'une machine connectée à ce réseau, d'en changer l'adresse en vue d'acquérir des droits d'accès indûs.
En outre, la table d'accès est scrutée pour chaque train de données transmises pour les communications en mode connecté, ce qui a pour effet de dégrader fortement les performances globales de transmission.

Un autre inconvénient apparaît du fait qu'un réseau privé peut être accessible par plusieurs routeurs, le flux de données transmises étant divisé entre ces derniers. Les tables d'accès doivent donc être établies de façon cohérente entre chaque point de passage.

Enfin, dans le but de prendre en compte la notion d'utilisateur, il est nécessaire d'utiliser des ressources du réseau avec une capacité de traitement et de discernement qui ne sont pas fournies par les routeurs.

A ce titre, on a proposé, afin de réaliser la fonction de sécurité, l'utilisation d'une machine spéciale en coupure, selon la technique dite du pare-feu. Cette solution est généralement coûteuse en performance, car elle doit traiter tous les flux de données entrants et sortants. En effet, cette technique implique la vérification d'un certain nombre de critères, afin d'accepter un accès, et doit permettre le routage des trames de données des communications acceptées. Plus l'analyse d'accès est fine, prise en compte de l'application demandée, de l'heure, d'un mode d'identification rigoureux par exemple, plus les performances de débit en sont affectées. En outre, l'installation d'une machine spéciale en coupure présente un risque non négligeable vis-à-vis du critère de sûreté de la transmission, car, se trouvant sur le passage du trafic contrôlé, une panne ou une erreur de cette machine spéciale est susceptible de bloquer tout trafic. La probabilité d'apparition de telles pannes ou erreurs est d'autant plus grande que les logiciels de traitement assurant la fonction de sécurité sont complexes. Enfin, la machine spéciale n'étant pas dédiée, les logiciels précités étant installés dans celle-ci, ceux-ci sont particulièrement complexes, et il est très coûteux de faire la preuve qu'il n'existe pas de défaut dans la fonction de sécurité qui rendrait le contrôle inefficace.

On a également proposé d'assurer la fonction de sécurité en protégeant toutes les machines connectées au réseau, un contrôle d'accès étant installé au niveau de chaque machine. Cette solution, très efficace, est cependant très coûteuse, chaque machine devant être protégée individuellement. L'installation de ce type de contrôle d'accès est donc à multiplier par le nombre de machines, ce qui implique le portage des parties logicielles de ce contrôle d'accès sur chaque type de machine et sur chaque version du système d'exploitation. La gestion de ce contrôle d'accès, indispensable pour bénéficier d'un bon niveau de sécurité, est rendue complexe par la dispersion des informations d'audit et l'évolution et la mise à jour des parties logicielles précitées est difficile à assurer, ce d'autant plus que les machines dans lesquelles ces parties logicielles sont installées n'étant pas dédiées, il faut veiller à leur intégrité.
Enfin, certaines machines qui nécessitent une grande sécurité d'accès pour la configuration de leur table de routage, n'ont souvent pas la puissance disponible pour permettre l'installation de tels logiciels.

La présente invention a pour objet de remédier aux inconvénients précités, par la mise en oeuvre d'un système de contrôle d'accès à des machines informatiques connectées en réseau privé.

Un autre objet de la présente invention est la mise en oeuvre d'un système de contrôle d'accès à des machines informatiques connectées en réseaux privés dans lesquels les organes de transport des données et de contrôle d'accès sont physiquement séparés.

Un autre objet de la présente invention, grâce à la séparation précitée, est de permettre le maintien de l'accessibilité au réseau en plusieurs points tout en réduisant la taille et la complexité des logiciels mis en oeuvre.

Le système de contrôle d'accès à des machines informatiques connectées en réseau privé, ce réseau comportant un ou plusieurs réseaux locaux interconnectés par l'intermédiaire d'un routeur et d'un commutateur et étant connecté sur un réseau extérieur fédérateur au niveau de points d'entrée-sortie permettant l'échange d'informations et/ou de données sous forme de messages successifs, avec au moins un terminal privé, objet de la présente invention, est remarquable en ce qu'il comprend au moins, associés en réseau privé, un module de contrôle d'accès interconnecté en chaque point d'entrée-sortie du réseau privé, désigné par réseau privé hôte, chaque module de contrôle d'accès permettant la transmission sélective par inhibition, autorisation libre ou conditionnelle de la transmission desdits messages vers le réseau privé hôte. Un module superviseur centralisé, associé au réseau privé hôte est interconnecté par une liaison spécialisée à chacun des modules de contrôle d'accès du réseau privé hôte, le module superviseur centralisé permettant de commander la transmission sélective de chacun des modules de contrôle d'accès, sur requête du terminal privé.

Le système de contrôle d'accès à des machines informatiques connectées en réseau privé, objet de la présente invention, trouve application dans le domaine de la télétransmission d'informations ou de données.

Il sera mieux compris à la lecture de la description et à l'observation des dessins ci-après, dans lesquels :
- la figure 1 représente un schéma illustratif du système de contrôle d'accès à des machines informatiques connectées en réseau privé conforme à l'objet de la présente invention ;
- les figures 2a et 2b à 2d représentent un schéma de protocole d'échange de messages sur la liaison spécialisée d'un système de contrôle d'accès selon l'invention, tel que représenté en figure 1a, respectivement la structure de ces messages ;
- les figures 3a et 3b, 3c représentent un schéma de protocole d'échange de messages sur la liaison spécialisée d'un système de contrôle d'accès selon l'invention, dans le cas où celui-ci met en oeuvre une procédure de chiffrement ou de certification ;
- la figure 4a représente un schéma illustratif des systèmes de contrôle d'accès à des machines informatiques connectées en réseau privé conforme à l'objet de la présente invention, dans le cas de deux réseaux privés réunis par un réseau fédérateur, l'intercommunication étant réalisée selon un protocole de type INTERNET.

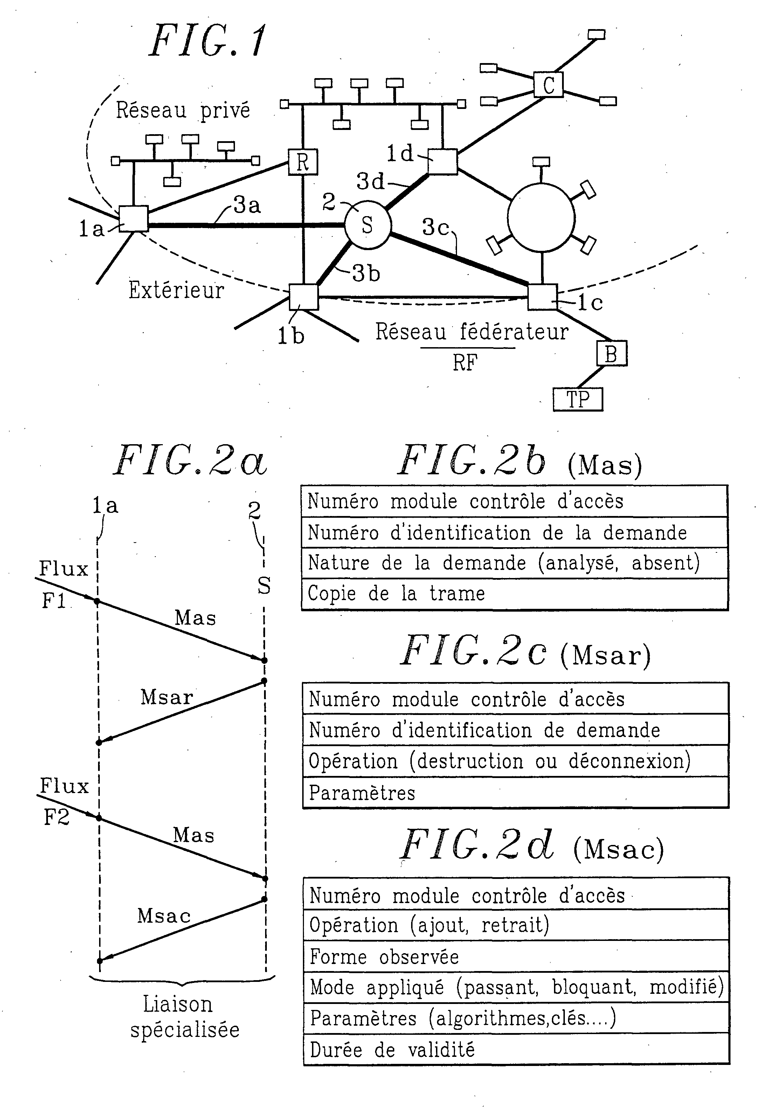

Une description plus détaillée d'un système de contrôle d'accès à des machines informatiques connectées en réseau privé, objet de la présente invention, sera maintenant donnée en liaison avec la figure 1.

D'une manière générale, on indique que le réseau privé comporte un ou plusieurs réseaux locaux interconnectés par l'intermédiaire d'un routeur, noté R, et d'un commutateur, noté C. De manière habituelle, le réseau privé peut être connecté sur un réseau extérieur fédérateur, noté RF, au niveau de points d'entrée-sortie permettant l'échange d'informations et/ou de données sous forme de messages successifs avec, soit au moins un terminal privé, noté TP, lequel peut être interconnecté à un point d'accès, noté B, du réseau fédérateur RF, soit à un autre réseau privé, lui-même interconnecté au réseau fédérateur RF, ainsi qu'il sera décrit ultérieurement dans la description.

Selon un aspect particulièrement avantageux du système de contrôle d'accès à des machines informatiques connectées en réseau privé, objet de l'invention, celui-ci comprend, ainsi que représenté sur la figure 1, un module de contrôle d'accès interconnecté en chaque point d'entrée-sortie du réseau privé, les modules de contrôle d'accès étant notés la à 1d sur la figure 1 et représentés en nombre limité afin de ne pas surcharger le dessin. Chaque module de contrôle d'accès permet la transmission sélective par inhibition, autorisation libre ou conditionnelle de la transmission des messages vers le réseau privé, lequel est désigné par réseau privé hôte en raison de l'équipement de ce dernier au moyen du système de contrôle d'accès selon l'invention.

En outre, un module superviseur centralisé 2 est prévu, lequel est associé au réseau privé hôte et interconnecté par une liaison spécialisée intègre, notée 3, à chacun des modules de contrôle d'accès la à 1d du réseau privé hôte. Sur la figure 1, la liaison spécialisée porte la référence 3 assortie de la lettre a, b, c ou d désignant, avec la référence 1, chaque module de contrôle d'accès correspondant. Le module superviseur centralisé 2 permet ainsi de commander la transmission sélective de chacun des modules de contrôle d'accès la à 1d sur requête du terminal privé TP où, le cas échéant, d'une machine distante connectée à un autre réseau privé, ainsi qu'il sera décrit ultérieurement dans la description.

Dans le mode de réalisation du système de contrôle d'accès à des machines informatiques connectées en réseau privé, selon l'invention, tel que représenté en figure 1, on comprend que chaque module de contrôle d'accès 1a à 1d ne dispose que de fonctionnalités réduites mais de grandes capacités de communication alors que le module superviseur centralisé 2 dispose au contraire de ressources de traitement et d'une mémoire de masse importante, mais de capacités de communication plus faibles. On comprend en effet que ces capacités de communication sont uniquement celles concernant la liaison spécialisée reliant le module superviseur centralisé 2 à chacun des modules de contrôle d'accès la à 1d.

D'un point de vue général, on indique que les modules de contrôle d'accès la à 1d font appel, sur la liaison spécialisée 3, au module superviseur centralisé 2 pour les actions importantes telles qu'autorisation d'ouverture de communication ou introduction d'un processus de certification des messages ou de chiffrement de ces derniers, ainsi qu'il sera décrit ultérieurement dans la description, ou l'avisent d'événements particuliers tels que fin de communication, demande de validation d'un réseau local distant équipé d'un même système de contrôle d'accès.

Le module superviseur centralisé 2 enregistre sur une mémoire de masse les demandes et avis formulés, soit par le terminal privé TP, soit par une machine interconnectée à un autre réseau privé, ainsi que mentionné précédemment. Ces demandes et avis sont transmis par chaque module de contrôle d'accès concerné. En fonction des informations dont le module superviseur centralisé dispose et d'informations complémentaires qu'il peut demander par dialogue d'identification, soit avec le terminal privé TP, soit avec une machine interconnectée à un autre réseau privé, le module superviseur centralisé 2 est alors en mesure de modifier l'état du module de contrôle d'accès la à 1d concerné pour donner à celui-ci l'autorisation de transporter l'information ou, au contraire, de rediriger le flux d'informations transmis par le réseau fédérateur RF, ou encore d'engendrer une déconnexion.

D'une manière générale, on indique que chaque module de contrôle d'accès la à 1d peut comporter une unité centrale de calcul de type processeur, et une mémoire vive dans laquelle des programmes de contrôle d'accès peuvent être mémorisés et modifiés par l'intermédiaire du module de contrôle d'accès 2 et de chaque liaison spécialisée correspondante.

Chaque module de contrôle d'accès 1a à 1d prend l'état indiqué par le module superviseur centralisé 2. Lors de l'arrivée d'un message sous forme d'une trame de données, les organes de transport se reportent directement au contexte des connexions en cours autorisées, lesquelles se trouvent en mémoire vive de chacun des modules de contrôle d'accès 1a à 1d.

De la même manière, on indique que le module superviseur centralisé est un module informatique comportant une unité centrale de calcul associée à une mémoire vive et bien entendu une mémoire de masse permettant de mémoriser l'état des configurations de chaque module de contrôle d'accès 1a à 1d.

Enfin, dans un mode de réalisation simple, la liaison spécialisée 3a à 3d peut être constituée par une liaison série par exemple, afin de permettre la transmission entre module superviseur centralisé 2 et terminal privé ou autre module superviseur centralisé d'un autre réseau privé, d'une pluralité de messages, ainsi qu'il sera décrit ci-après. Dans le cas où un terminal privé TP est utilisé, du type terminal nomade, celui-ci est alors équipé d'un module spécifique permettant d'engendrer, recevoir et interpréter les messages précités issus du module superviseur centralisé 2 correspondant, auprès duquel une requête de demande d'accès à une machine informatique du réseau privé, par le terminal TP, a été formulée.

Un exemple des flux d'informations échangés entre tout module de contrôle d'accès tel que les modules la à 1d et le module superviseur centralisé 2, par l'intermédiaire d'une liaison spécialisée 3 correspondante, liaison 3a à 3d, sera maintenant décrit en liaison avec les figures 2a à 2d, puis 3a à 3c.

Sur la figure 2a, on a représenté à titre d'exemple un protocole d'échange de messages entre le module de contrôle d'accès 1a par exemple et le module superviseur centralisé 2 de la figure 1.

Lorsque le module de contrôle d'accès la reçoit un flux F1 de données ou de messages transmis par le réseau fédérateur RF et non présent dans sa table en mode passant, bloquant ou modifié, un tel flux de données étant dans ce cas considéré comme inconnu pour le module de contrôle d'accès la considéré, celui-ci mémorise les messages constitutifs du flux précité et transmet sur la liaison spécialisée 3a au module superviseur centralisé 2 un message, noté Mas, constitué lui-même par une trame, contenant les informations telles que représentées en figure 2b. On indique que le message Mas comporte au moins un numéro de référence ou d'identification d'adresse du module de contrôle d'accès considéré la, un numéro d'identification de la demande, ce numéro d'identification de la demande étant attribué par le module de contrôle d'accès la considéré pour le flux F1 de données précité, un code permettant d'identifier la nature de la demande, ce code pouvant être de la manière la plus simple constitué par la valeur d'un bit prenant la valeur 1 lorsque les messages constitutifs du flux de données F1 ont pu être analysés et, au contraire, mis à la valeur 0 lorsqu'un tel flux n'est pas identifié, c'est-à-dire lorsqu'il n'est pas présent dans la table d'accès du module de contrôle d'accès la considéré. Enfin, chaque message Mas comprend une copie de la trame constitutive du flux F1 reçu au niveau du module de contrôle d'accès considéré 1a.

Selon un aspect particulièrement avantageux du système de contrôle d'accès, objet de la présente invention, le module superviseur centralisé 2 ne répond explicitement à la demande précitée qu'en cas d'un refus. Dans un tel cas, ainsi que représenté en figure 2a, le module superviseur centralisé 2 envoie, par l'intermédiaire de la liaison spécialisée 3a vers le module de contrôle d'accès 1a, un message, noté Msar, dit de refus, permettant en fait de terminer le processus de demande d'accès pour le flux de données F1 considéré.

A titre d'exemple non-limitatif, ainsi que représenté en figure 2c, le message dit de refus, Msar, peut comprendre le numéro de module de contrôle d'accès considéré, le numéro d'identification de la demande qui est retourné vers le module de contrôle d'accès la précité, une instruction d'opération consistant à détruire le message constituant le flux de données F1 ou d'assurer la déconnexion du module de contrôle d'accès la précité. D'autres paramètres peuvent être prévus dans le message Msar tel que représenté en figure 2c.

Si au contraire un flux de données incident au niveau du module de contrôle d'accès considéré, tel que le module la, est accepté, ce flux de données incident étant noté F2 sur la figure 2a, l'acceptation de ce flux incident étant réalisée par le module superviseur centralisé 2 suite à la réception d'un même message Mas par exemple, le module superviseur centralisé 2 précité réagit au contraire en réalisant un stockage de la demande d'accès considérée et envoie un message de configuration, par l'intermédiaire de la liaison spécialisée 3a, vers le module de contrôle d'accès la considéré. Ce message de configuration est noté Msac sur la figure 2a.

Ainsi que représenté à titre d'exemple sur la figure 2d, ce message de configuration peut comprendre le numéro de module de contrôle d'accès considéré 1a, un code relatif à l'opération réalisée pour assurer cette configuration, une telle opération pouvant consister, soit en un ajout soit en un retrait d'un identificateur d'accès, un code de forme observée relatif à la nature du flux de données F1 et bien entendu un champ de mode de traitement appliqué par le module de contrôle d'accès la à la transmission du flux de données F2 vers sa destination dans le réseau privé hôte, la transmission vers cette destination étant assurée par le routeur R par exemple. On comprend bien sûr que ce mode de traitement de la transmission désigne et commande au module de contrôle d'accès la considéré, soit la transmission sélective par inhibition, soit l'autorisation libre ou conditionnelle de la transmission des messages du flux de données F2 vers le réseau privé hôte précité.

Bien entendu, le message de configuration Msac peut comprendre également un champ relatif à des paramètres constitutifs d'algorithmes de traitement ou de clés de chiffrement des messages ou de certification, ainsi qu'il sera décrit ultérieurement dans la description, ainsi qu'un champ relatif à la durée de validité de l'accès qui vient d'être accordé.

Lorsque, à des fins de sécurité, un accès est accordé par le module superviseur centralisé 2 en mode analysé, ce mode analysé permettant d'assurer la transmission des flux de données tels que les flux F2 par exemple suite à un processus de chiffrement ou de certification des messages constitutifs de ces flux de données, un dialogue de type dialogue interactif est institué entre le module superviseur centralisé 2, représenté en figure 1, et le terminal privé TP ou un autre module superviseur installé dans un autre réseau privé interconnecté au réseau fédérateur RF, ainsi que mentionné précédemment dans la description. Ce dialogue interactif permet de préciser, entre le module superviseur centralisé 2 et le terminal privé TP ou le module superviseur centralisé, noté S, de l'autre réseau privé connecté au réseau fédérateur RF, de formaliser le mode de chiffrement ou de certification des messages échangés. Ce dialogue interactif permet alors au module superviseur centralisé 2 de commander le passage de la table d'accès du module de contrôle d'accès considéré, la par exemple, en mode d'autorisation conditionnelle de la transmission des messages constitutifs du flux de messages incidents vers le réseau privé hôte. Il en est de même pour le module superviseur centralisé S' installé dans l'autre réseau privé ou pour le terminal privé TP.

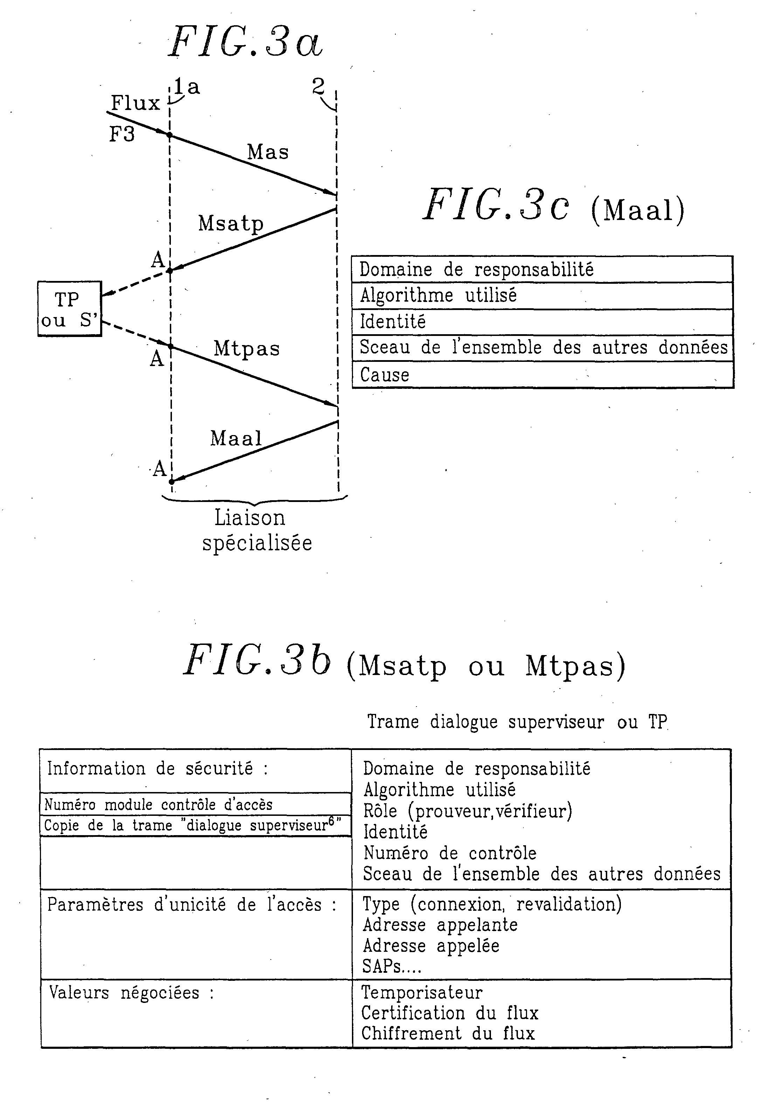

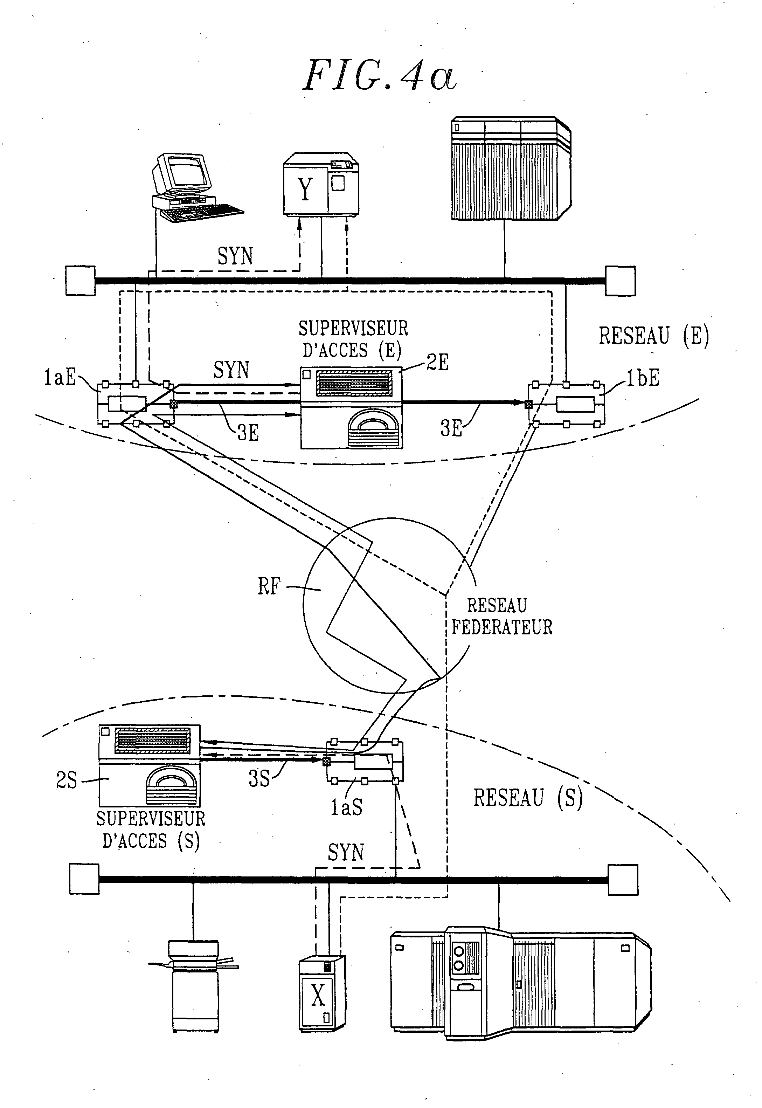

Dans un tel cas, on indique que chaque module superviseur centralisé transmet ou reçoit une trame de dialogue d'authentification, constituant un message d'authentification suite à la réception d'une demande d'accès du module de contrôle d'accès la, ainsi que représenté sur la figure 3a. Le module superviseur centralisé 2 adresse alors au module de contrôle d'accès la le message d'authentification, désigné par Msatp, lequel est destiné, par l'intermédiaire de la liaison spécialisée 3a, du module de contrôle d'accès la et du réseau fédérateur RF, soit au,terminal privé TP, soit au superviseur S' de l'autre réseau privé, ainsi que mentionné précédemment dans la description. Le message Msatp comprend, ainsi que représenté en figure 3b, un numéro de module de contrôle d'accès, le module de contrôle d'accès la dans l'exemple présentement décrit, ainsi qu'un champ relatif à la copie de la trame dialogue superviseur, lequel peut comporter, ainsi que représenté sur la même figure 3b, un champ d'informations de sécurité comportant des informations relatives au domaine de responsabilité, à l'algorithme de certification ou de chiffrement utilisé, au rôle attribué à l'un et l'autre des modules superviseurs centralisés 2 ou S', à l'identité du demandeur d'accès, au numéro de contrôle de celui-ci et à un sceau de l'ensemble des autres données. La trame dialogue superviseur peut comprendre également des paramètres d'unicité de l'accès concernant le type de connexion ou de revalidation de celles-ci, l'adresse du demandeur, c'est-à-dire soit du terminal privé TP, soit d'une machine informatique interconnectée à l'autre réseau spécialisé géré par le module superviseur centralisé S', l'adresse de la machine interconnectée au réseau privé considéré géré par le module superviseur centralisé 2, par exemple. En outre, un champ de valeurs négociées peut être contenu dans la trame de dialogue superviseur, ces valeurs négociées pouvant concerner une valeur de temporisation ou de temporisateur, valeur de certification du flux et valeur de chiffrement du flux.

On comprend, ainsi que représenté en figure 3a, que le dialogue interactif, par l'intermédiaire des messages Msatp ou Mtpas entre superviseurs ou superviseur et terminal privé TP, est ainsi effectué par l'intermédiaire des liaisons spécialisées et du réseau fédérateur, la transmission des messages d'authentification tels que les messages Msatp ou Mtpas, étant représentée sur le réseau fédérateur en pointillés sur la figure 3a.

Le dialogue interactif entre le module superviseur centralisé 2 et le module superviseur centralisé correspondant S' ou, le cas échéant, le terminal privé TP, se fait par un numéro de port ou, en langage anglo-saxon, de NSAP pour "*NETWORK SERVICE ACCESS POINT*", attribué par l'autorité de normalisation du réseau fédérateur RF. Chaque module de contrôle d'accès, tel que le module la, reconnaît cet attribut et achemine vers le superviseur considéré tous les messages d'authentification précités et envoie normalement les messages correspondants venant de ce dernier. Ainsi, par le jeu des messages d'authentification Msatp et Mtpas, le module superviseur centralisé 2 demande, soit au terminal privé TP, soit au superviseur S', de l'assurer qu'il est bien à l'origine du flux F3, représenté sur la figure 3a, et de prouver l'identité du demandeur. Le module superviseur centralisé 2 ou le terminal privé TP, jouant le rôle de prouveur, vérifie l'authenticité de la demande effectuée par le terminal privé TP ou par une machine interconnectée à l'autre réseau privé, munie du superviseur S' précité, et adresse, par le message d'authentification Mtpas, une trame certifiée correspondante vers le module superviseur centralisé 2.

En outre, les modules superviseurs centralisés 2 et S' peuvent envoyer des messages d'alarme, notés Maal et représentés en figure 3a et 3c, ces messages comportant par exemple un champ relatif au domaine de responsabilité, un champ relatif à l'algorithme utilisé, un champ relatif à l'identité, un champ relatif au sceau de l'ensemble des autres données et de la cause de l'alarme ainsi engendrée.

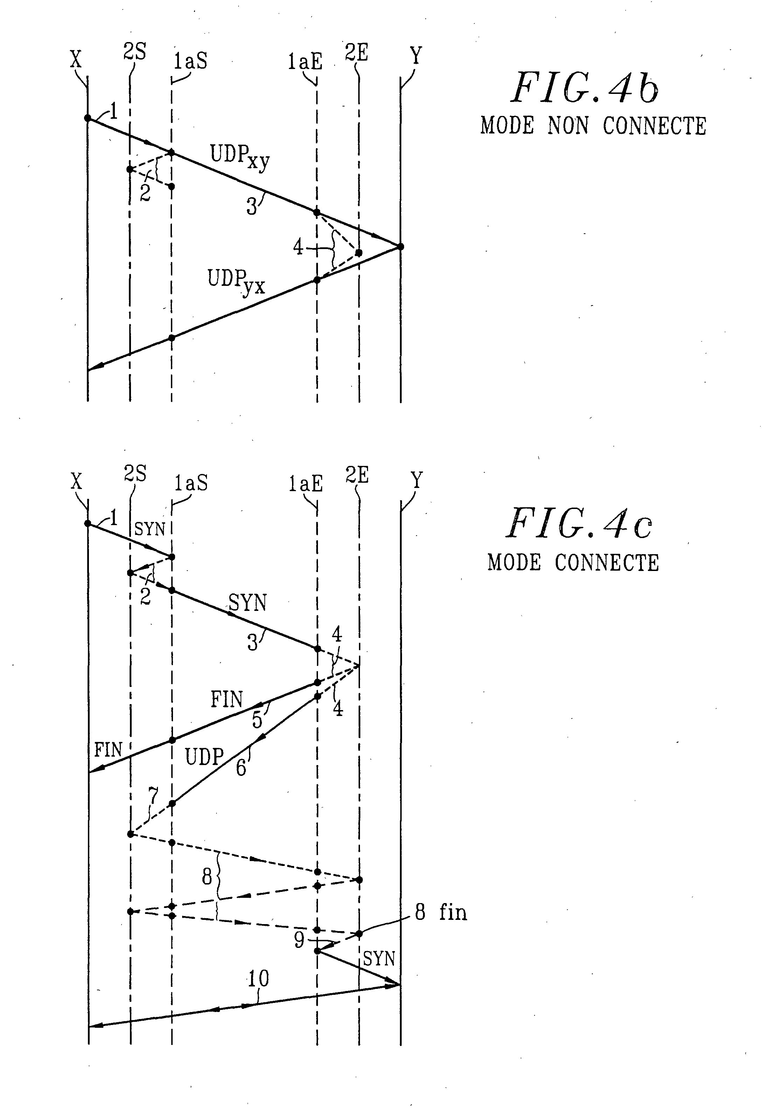

Une description plus détaillée d'un système de contrôle d'accès à des machines informatiques connectées en réseau privé, dans un mode de réalisation particulier dans lequel les messages sont transmis selon un protocole INTERNET, sera maintenant donnée en liaison avec la figure 4a et les figures 4b et 4c.

Le mode de réalisation présentement décrit concerne plus particulièrement le cas où un système de contrôle d'accès, conforme à l'objet de la présente invention, équipe un premier réseau privé, portant la référence E, ce premier réseau privé comportant bien entendu un module superviseur centralisé, noté 2E, et une pluralité de modules de contrôle d'accès, lesquels sont notés 1aE et 1bE afin de ne pas surcharger le dessin. Le réseau E est supposé comporter une machine informatique Y interconnectée par l'intermédiaire des modules de contrôle d'accès 1aE et 1bE au réseau fédérateur RF, l'échange et la transmission des messages sur ce réseau satisfaisant au protocole INTERNET précité.

En outre, un autre réseau privé, noté réseau S, est également muni d'un système de contrôle d'accès, conforme à l'objet de la présente invention, ce système, afin de simplifier la description de l'ensemble, étant réputé contenir un module superviseur centralisé, noté 2S, interconnecté par une liaison spécialisée 3 à un ou plusieurs modules de contrôle d'accès, notés laS. Une machine informatique X est interconnectée à l'autre réseau privé S et, par l'intermédiaire du module de contrôle d'accès 1aS, au réseau fédérateur RF. La machine informatique X est susceptible d'émettre et de recevoir des messages par l'intermédiaire du réseau fédérateur F vers un autre réseau privé, tel que le réseau E par exemple, plus particulièrement vers la machine Y de celui-ci. La transmission et la réception des messages précités satisfont bien entendu aux spécifications du protocole INTERNET.

On considère ainsi que la machine informatique X ou Y constitue en fait l'équivalent d'un terminal privé, interconnecté à l'un et l'autre réseau privé respectivement. Chacun des réseaux privés, et en particulier l'autre réseau privé, le réseau S, comporte un module de contrôle d'accès, tel que le module 1aS interconnecté en chaque point d'entrée-sortie de ce réseau privé, lequel constitue ainsi un autre réseau privé hôte. Chaque module de contrôle d'accès de ce dernier permet la transmission sélective par inhibition, autorisation libre ou conditionnelle de la transmission des messages vers le réseau privé hôte, le réseau privé E.

Bien entendu, un autre module superviseur centralisé, 2S, est associé au réseau privé S constituant l'autre réseau privé hôte, cet autre module superviseur étant interconnecté par une liaison spécialisée à chacun des modules de contrôle d'accès, tel que le module 1aS précédemment cité. Ce module superviseur centralisé permet de commander la transmission sélective de chaque module de contrôle d'accès associé à l'autre réseau privé, le réseau S.

Bien entendu, la transmission sélective de chacun des modules de contrôle d'accès, tel que 1aE à 1bE et 1aS entre réseau privé et autre réseau privé E et S est soumise à un protocole de dialogue interactif entre le module superviseur 2E associé au réseau privé E et le module superviseur 2S associé à l'autre réseau privé S.

Le protocole de dialogue interactif permet, en fonction d'un critère d'accès et d'informations d'identification de l'autre réseau privé S, au niveau de l'un des modules de contrôle d'accès du réseau privé hôte E, tel que le module de contrôle d'accès 1aE par exemple du réseau privé hôte, d'inhiber la transmission des messages entre le réseau privé et l'autre réseau privé ou d'autoriser librement la transmission des messages entre l'autre réseau privé et le réseau privé S respectivement E. Il permet encore d'autoriser, conditionnellement à une opération de chiffrement des messages, la transmission de ces messages sous forme chiffrée ou certifiée entre l'autre réseau privé, réseau S, et le réseau privé, le réseau E.

De manière plus spécifique, ainsi que représenté en figures 4a et 4b, on indique que les protocoles de transport satisfaisant au protocole INTERNET peuvent être répartis en deux classes, une première classe correspondant au mode dit non-connecté dans lequel les messages transmis sont indépendants au niveau d'intercommunication considéré, et une deuxième classe dite en mode connecté dans lequel chaque couche gère successivement l'acquisition des messages.

Ainsi qu'on l'a représenté en figure 4b relativement au mode non-connecté, la machine informatique X de l'autre réseau privé S envoie ses messages constitués par des trames UDP. Le module de contrôle 1aS de l'autre réseau privé S vérifie dans son contexte, c'est-à-dire dans les données constituant sa table d'accès, le mode de la communication en sortie. L'opération d'envoi des trames UDP par la machine X vers le module de contrôle d'accès 1aS porte la référence 1 sur la figure 4b. Si la demande de communication en sortie n'est pas dans le contexte précité, le module de contrôle d'accès 1aS demande, par l'intermédiaire de la liaison spécialisée 3S, au module superviseur centralisé 2S s'il doit rajouter dans son contexte, c'est-à-dire dans sa table d'accès, la communication demandée, référencée par les adresses, les numéros de ports d'entrée-sortie, ainsi que précédemment décrit en liaison avec les figures 2a à 2d par exemple. En outre, la demande au module superviseur centralisé 2S comporte également une requête de mode de transmission, mode passant ou mode bloquant, ainsi que décrit précédemment en liaison avec les figures précédemment citées. Le nouvel état demandé disparaît des tables d'allocation si aucun trafic n'est plus assuré sur cette communication pendant une valeur de temps paramétrée ou sur instruction du module superviseur centralisé 2S précité, en fonction d'impératifs de gestion des réseaux liés à un changement de créneau horaire par exemple. Le module superviseur centralisé 2S enregistre alors cette demande, établissement ou rétablissement d'une communication de type UDP entre les machines X et Y. Sur la figure 4b, le message envoyé par le module de contrôle d'accès 1aS au module superviseur centralisé 2S est représenté en pointillés et porte la référence 2. La trame UDP_{xy} est transmise par le module de contrôle d'accès 1aS de l'autre réseau privé S au module de contrôle d'accès 1aE du réseau privé E par l'opération portant la référence 3 par l'intermédiaire du réseau fédérateur RF.

De la même manière, le module de contrôle d'accès 1aE ou le cas échéant le module de contrôle d'accès 1bE, selon les disponibilités du réseau fédérateur RF, sur réception de la trame UDP_{xy}, envoie un message de requête au module superviseur centralisé 2E, lequel va autoriser, dans les conditions précédemment mentionnées dans la description, librement ou conditionnellement, voire refuser cette communication. Cette opération porte la référence 4 sur la figure 4b. Dans le cas où la machine Y est autorisée à répondre, l'autorisation de réponse étant située dans le contexte, c'est-à-dire dans la table d'accès du module de contrôle d'accès 1aE ou 1bE, soit préalablement, soit suite à l'opération 4 précédemment mentionnée, l'autorisation ayant été apportée par cette opération par le module superviseur centralisé 2E, le module de contrôle d'accès 1aE, en présence de l'autorisation de communication dans sa table d'accès, permet la transmission d'une trame UDP_{yx} vers le module de contrôle d'accès 1aS par l'intermédiaire du réseau fédérateur RF et finalement par l'intermédiaire du module de contrôle d'accès précité 1aS vers la machine X.

Dans le cas du mode connecté, au contraire, ainsi que représenté en figure 4c, afin d'ouvrir la connexion, la machine X de l'autre réseau privé S envoie une trame TCP spécifique, cette trame étant notée SYN sur la figure 4c considérée. Le module de contrôle d'accès 1aS, sur réception de la trame TCP spécifique précitée, adresse sur la liaison spécialisée 3 vers le module superviseur centralisé 2S, cette demande d'ouverture. Le module superviseur centralisé 2S scrute ses tables d'accès afin d'autoriser, ou non, la transmission par la machine X de messages vers le réseau privé E avec la requête de services demandés. Le module superviseur centralisé 2S enregistre cette requête et maintient celle-ci en mémoire tampon grâce à la mémorisation de paramètres d'adresses des machines X et Y, de la trame TCP et des ports d'entrée-sortie correspondants, cette information étant gardée en mémoire, soit dans l'attente d'une demande de vérification d'une machine distante, la machine Y, soit à l'expiration d'un temporisateur. Sur autorisation délivrée par le module superviseur centralisé 2S à la fin de l'opération 2 représentée en figure 4c, le signal TCP spécifique, noté SYN, est transmis par le module de contrôle d'accès 1aS à l'opération 3, par l'intermédiaire du réseau fédérateur RF, lequel l'achemine jusqu'au réseau privé E. Le module de contrôle d'accès 1aE ou 1bE reçoit alors la trame TCP spécifique précitée, constituée par le signal SYN, et après mémorisation de ce signal, demande par l'opération 4 au module superviseur centralisé 2E les instructions pour assurer la transmission de la requête dans les conditions précédemment citées dans la description. Le module superviseur centralisé 2E enregistre cette demande d'entrée puis, en fonction des règles d'accès disponibles dans la table d'accès de celui-ci, décide :
- soit de refuser la communication, le module de contrôle d'accès 1aE précité recevant dans ce cas, ainsi que représenté en figure 4c, un avis par l'intermédiaire d'une trame de fin, FIN, le module de contrôle d'accès 1aE transmettant à l'opération 5 un message FIN de rupture de la connexion ;
- soit d'accepter sans contrôle supplémentaire la poursuite de la transmission des messages ;
- ou encore d'envoyer vers la machine informatique X de l'autre réseau privé une trame de type UDP sur un port spécifique, ainsi que représenté par l'opération 6 sur la figure 4c. Le module de contrôle d'accès 1aS envoie la trame spécifique UDP vers le module superviseur centralisé 2S par l'opération référencée 7. Ce dernier vérifie qu'il sait répondre au module superviseur centralisé 2E et que la communication en cours de contrôle est bien à l'instigation d'une machine de son réseau, une machine de l'autre réseau privé S et en particulier la machine X précitée. Un dialogue de type dialogue interactif s'installe entre les deux modules superviseurs centralisés 2E et 2S par l'opération 8, laquelle est représentée en pointillés sur la figure 4c, ce dialogue interactif ayant bien entendu pour objet d'apporter la preuve des assertions formulées dans les requêtes des machines X et Y. Lorsque cette vérification est terminée, c'est-à-dire à la fin de l'étape 8 symbolisée par la référence 8_{FIN} sur la figure 4c, le module superviseur centralisé 2E envoie un message d'autorisation au module de contrôle d'accès 1aE, tel que représenté à l'opération 9, le module de contrôle d'accès 1aE se positionnant en mode passant, libre ou contrôlé, et transmettant alors le message SYN précédemment mémorisé à la fin de l'étape 3, vers la machine Y du réseau privé E.

Les machines X et Y peuvent alors communiquer par une étape 10 consistant en des échanges réciproques de messages, cette étape d'échanges de messages étant symbolisée par les flèches inversées indiquant la transmission alternée dans l'un et l'autre sens de messages entre les machines X et Y. Les modules de contrôle d'accès 1aS et 1aE restent bien entendu en mode passant tant qu'il n'y a pas d'absence de flux de données dépassant un temps de durée déterminé et choisi par l'intermédiaire de temporisateurs.

Si une partie du flux des données est routée par le réseau fédérateur RF vers le module de contrôle d'accès 1bE du réseau privé E, pour des raisons tenant à la seule gestion du réseau fédérateur, le module de contrôle d'accès 1bE réalise le processus de transmission tel que décrit précédemment aux étapes 4, 6, 7 et 8 relativement au module de contrôle d'accès 1aE et le module superviseur centralisé 2E transmet son accord dans des conditions semblables par simple duplication du message gardé en mémoire de l'acceptation donnée au module de contrôle d'accès laE.

On a ainsi décrit un système de contrôle d'accès à des machines informatiques connectées en réseau privé particulièrement performant dans la mesure où, contrairement aux routeurs avec liste d'accès, le système objet de la présente invention permet de mettre en place davantage de modes d'accès que ces derniers et sur des couches d'intercommunication différentes.

Ainsi, en mode passant, le flux d'informations pour un couple de machines appelant/appelé est transporté sans aucune contrainte,
- en mode bloquant, le flux n'est pas transmis ;
- en mode validé, les flux en mode connecté sont validés par une authentification à l'ouverture, le flux devenant passant ou bloquant après cette validation et le flux non connecté pouvant être certifié ou chiffré en utilisant une clé de chiffrement fonction du temps ;
- en mode modifié dans lequel un paramètre de la communication est changé lors de sa communication, l'adresse interne par exemple ou une certification ou un chiffrement pouvant être appliqué à la trame ou message transmis ;
- en mode analysé, le flux de données est redirigé temporairement vers le superviseur afin que ce dernier puisse réaliser une analyse plus fine du flux de données transmises, le module superviseur centralisé pouvant fixer un mode de transmission sur un flux lié à la même communication.

Les conditions d'application des modes de fonctionnement précités sont également plus souples que ceux des systèmes de l'art antérieur car ils peuvent être rendus fonction de l'heure, du jour, de la semaine, par exemple.

En outre, le nombre d'accès de communications à contrôler en mode connecté n'influe pratiquement pas sur le flux de données transmis. En effet, chaque module de contrôle d'accès ne demande l'avis du module superviseur centralisé auquel il est relié que pour les trames formant l'ouverture ou la fermeture d'un flux de données transmis, les trames ou messages qui composent le flux de données transmis des communications validées passant normalement de manière transparente.

En outre, dans le cas où le système de contrôle d'accès, objet de la présente invention, occupe un réseau privé et un autre réseau privé d'origine et de destination, il est possible de chiffrer ou de certifier les données transmises après engagement d'un processus de chiffrement entre les deux modules superviseurs centralisés et la distribution de la clé de chiffrement correspondant aux organes de transport. Le système de contrôle d'accès, objet de la présente invention, permet de ne pas limiter le flux chiffré ou certifié à un seul point de passage.

## Revendications

1. Système de contrôle d'accès à des machines informatiques connectées en réseau privé, ledit réseau privé comportant un ou plusieurs réseaux locaux interconnectés par l'intermédiaire d'un routeur (R) et d'un commutateur (C), ledit réseau privé étant connecté sur un réseau extérieur fédérateur (RF) au niveau de points d'entrée-sortie permettant l'échange d'informations et/ou de données, sous forme de messages successifs, avec au moins un terminal privé (TP), **caractérisé en ce que** ledit système de contrôle d'accès comporte au moins, associés au réseau privé :
- un module de contrôle d'accès (1a ... 1d) interconnecté en chaque point d'entrée-sortie du réseau privé, désigné par réseau privé hôte, chaque module de contrôle d'accès comprenant des moyens pour permettre une transmission sélective par inhibition, autorisation libre ou conditionnelle de la transmission desdits messages vers ledit réseau privé hôte ;
- un module superviseur centralisé (2), associé audit réseau privé hôte et interconnecté par une liaison spécialisée à chacun des modules de contrôle d'accès dudit réseau privé hôte, ledit module superviseur centralisé comprenant des moyens pour commander ladite transmission sélective de chacun des modules de contrôle d'accès, sur requête dudit au moins un terminal privé.

2. Système de contrôle d'accès selon la revendication 1, **caractérisé en ce que** ledit au moins un terminal privé étant interconnecté à un autre réseau privé, ledit système comporte en outre, associé audit autre réseau privé :
- un module de contrôle d'accès (1aS) interconnecté en chaque point d'entrée-sortie dudit autre réseau privé, constituant un autre réseau privé hôte ; chaque module de contrôle d'accès comprenant des moyens pour permettre une transmission sélective par inhibition, autorisation libre ou conditionnelle de la transmission desdits messages vers ledit réseau privé hôte,
- un autre module superviseur centralisé (2S) associé audit autre réseau privé hôte, et interconnecté par une liaison spécialisée à chacun des modules de contrôle d'accès dudit autre réseau privé hôte, ledit autre module superviseur centralisé comprenant des moyens pour commander ladite transmission sélective de chaque module de contrôle d'accès associé audit autre réseau privé.

3. Système de contrôle d'accès selon la revendication 2, **caractérisé en ce que** ladite transmission sélective de chacun des modules de contrôle d'accès entre réseau privé et autre réseau privé est soumise à un protocole de dialogue interactif entre le module superviseur associé audit réseau privé et le module superviseur associé audit autre réseau privé, ledit protocole de dialogue interactif permettant, en fonction d'un critère d'accès et d'informations d'identification dudit autre réseau privé, au niveau d'au moins un module de contrôle d'accès dudit réseau privé hôte :
- soit d'inhiber la transmission desdits messages entre ledit autre réseau privé et ledit réseau privé ;
- soit d'autoriser librement la transmission desdits messages entre ledit autre réseau privé et ledit réseau privé ;
ou encore d'autoriser conditionnellement à une opération de chiffrement desdits messages la transmission de ces messages sous forme chiffrée ou certifiée entre ledit autre réseau privé et ledit réseau privé.

4. Système de contrôle d'accès selon la revendication 1, **caractérisé en ce que** ledit terminal privé comporte un module de contrôle d'accès contrôlé par ledit module superviseur centralisé associé audit réseau privé.

## Patentansprüche

1. Zugangskohtrollsystem für an einem Privatnetzwerk angeschlossene Computer, wobei das Privatnetzwerk ein oder mehrere mittels eines Routers (R) und eines Switches (C) vemetzte lokale Netzwerke umfasst, wobei das Privatnetzwerk auf der Ebene der Eingangs-/Ausgangspunkte über einen äusseren Backbone (RF) angeschlossen ist, um den Austausch von Informationen und/oder Daten in Form von aufeinanderfolgenden Mitteilungen mit wenigstens einem Privatterminal (TP) zu erlauben, **dadurch gekennzeichnet, dass**
das Zugangskontrollsystem dem Privatnetzwerk zugeordnet wenigstens enthält:
- ein mit jedem Eingangs-/Ausgangspunkt des Privatnetzwerks, welcher als Privatnetzwerk-Host bezeichnet ist, vernetztes Zugangskontrollmodul (1a ... 1d), wobei jedes Zugangskontrollmodul Mittel umfasst, um eine selektive Übertragung durch Verhinderung, freie oder bedingte Zulassung der Übertragung der Mitteilungen zum Privatnetzwerk-Host zu erlauben;
- ein zentralisiertes Überwachungsmodul (2), welches zugeordnet zum Privatnetzwerk-Host ist und welches durch eine spezielle Verbindung mit jedem der Zugangskontrollmodule des Privatnetzwerk-Hosts vemetzt ist, wobei das zentralisierte Überwachungsmodul Mittel umfasst, um auf Anforderung des wenigstens einen Privatterminals die selektive Übertragung jedes Zugangskontrollmoduls zu steuern/regeln.

2. Zugangskontrollsystem nach Anspruch 1, **dadurch gekennzeichnet, dass** das wenigstens eine Privatterminal mit einem anderen Privatnetzwerk vemetzt ist, wobei das System dem anderen Privatnetzwerk zugeordnet im weiteren enthält:
- ein mit jedem Eingangs-/Ausgangspunkt des anderen Privatnetzwerks, welcher einen anderen Privatnetzwerk-Host bildet, vemetztes Zugangskontrollmodul (1aS); wobei jedes Zugangskontrollmodul Mittel umfasst, um eine selektive Übertragung durch Verhinderung, freie oder bedingte Zulassung der Übertragung der Mitteilungen zum Privatnetzwerk-Host zu erlauben,
- ein anderes zentralisiertes Überwachungsmodul (2S), welches zum anderen Privatnetzwerk-Host zugeordnet ist und welches durch eine spezielle Verbindung mit jedem der Zugangskontrollmodule des anderen Privatnetzwerk-Hosts vemetzt ist, wobei das andere zentralisierte Überwachungsmodul Mittel umfasst, um die selektive Übertragung jedes zum anderen Privatnetzwerk zugeordneten Zugangskontrollmoduls zu steuern/regeln.

3. Zugangskoritrollsystem nach Anspruch 2, **dadurch gekennzeichnet, dass** die selektive Übertragung jedes Zugangskontrollmoduls zwischen dem Privatnetzwerk und dem anderen Privatnetzwerk einem zwischen dem dem Privatnetzwerk zugeordneten Überwachungsmodul und dem dem anderen Privatnetzwerk zugeordneten Überwachungsmodul Protokoll für interaktiven Dialog unterworfen ist, wobei das Protokoll für interaktiven Dialog in Funktion eines Zugangskriteriums und Identifikationsinformationen des anderen Privatnetzwerks auf der Ebene des wenigstens einen Zugangskontrollmoduls des Privatnetzwerk-Hosts erlaubt:
- entweder die Übertragung der Mitteilungen zwischen dem anderen Privatnetzwerk und dem Privatnetzwerk zu verhindern;
- oder die Übertragung der Mitteilungen zwischen dem anderen Privatnetzwerk und dem Privatnetzwerk zu frei zuzulassen;
oder noch durch eine Chiffrierungsoperation der Mitteilungen die Übertragung dieser Mitteilungen in chiffrierter oder zertifizierter Form zwischen dem anderen Privatnetzwerk und dem Privatnetzwerk bedingt zuzulassen.

4. Zugangskontrollsystem nach Anspruch 1, **dadurch gekennzeichnet, dass** das Privatterminal ein Zugangskontrollmodul umfasst, welches durch das dem Privatnetzwerk zugehörige, zentralisierte Überwachungsmodul gesteuert/geregelt ist.

## Claims

1. System for control of access to computer machines which are connected in a private network, the said private network including one or more local networks interconnected by means of a router (R) and of a switch (C), the said private network being connected to an interconnecting external network (RF) at input-output points allowing the exchange of information and/or of data in the form of successive messages, with at least one private terminal (TP), **characterized in that** the said access control system includes at least, combined with the private network:
- an access control module (1a ... 1d) interconnected at each input-output point of the private network, designated by host private network, each access control module comprising means for allowing the selective transmission, by inhibition, free or conditional authorization of the transmission of the said messages to the said host private network;
- a centralized supervisor module (2), associated with the said host private network and interconnected by a dedicated link to each of the access control modules of the said host private network, the said centralized supervisor module comprising means for controlling the said selective transmission of each of the access control modules, upon request from the said at least one private terminal.

2. Access control system according to Claim 1, **characterized in that** the said at least one private terminal being interconnected to another private network, the said system further includes, associated with the said other private network:
- an access control module (1aS) interconnected at each input-output point of the said other private network, constituting another host private network; each access control module comprising means for allowing a selective transmission, by inhibition, free or conditional authorization of the transmission of the said messages to the said host private network,
- another centralized supervisor module (2S) which is associated with the said other host private network, and interconnected by a dedicated link to each of the access control modules of the said other host private network, the said other centralized supervisor module comprising means for controlling the said selective transmission of each access control module associated with the said other private network.

3. Access control system according to Claim 2, **characterized in that** the said selective transmission of each of the access control modules between private network and other private network is subject to an interactive dialogue protocol between the supervisor module associated with the said private network and the supervisor module associated with the said other private network, the said interactive dialogue protocol making it possible, depending on an access criterion and on identification information of the said other private network, within at least one access control module of the said host private network:
- either to inhibit the transmission of the said messages between the said other private network and the said private network;
- or freely to authorize transmission of the said messages between the said other private network and the said private network;
or, conditional on an operation of enciphering the said messages, to authorize transmission of these messages in encrypted or certified form between the said other private network and the said private network.

4. Access control system according to Claim 1, **characterized in that** the said private terminal includes an access control module controlled by the said centralized supervisor module associated with the said private network.
